Europäisches Patentamt

(19) European Patent Office

Office européen des brevets

(11) Numéro de publication: **0 278 830**
**A1**

(12) **DEMANDE DE BREVET EUROPEEN**

(21) Numéro de dépôt: 88400157.9

(22) Date de dépôt: 25.01.88

(51) Int.Cl.⁴: **C 02 F 1/62**

(30) Priorité: 26.01.87 CA 528190

(43) Date de publication de la demande:
17.08.88 Bulletin 88/33

(84) Etats contractants désignés:
AT BE CH DE ES FR GB GR IT LI LU NL SE

(71) Demandeur: **HYDRO-QUEBEC**
**75, Boulevard Dorchester Ouest**
**Montréal Québec H2Z 1A4 (CA)**

(72) Inventeur: **Leigh, Charles H.**
**335 Etienne Brûlé**
**St. Bruno Que. J3V 2N7 (CA)**

**Laurin, Michel**
**1864 St. Laurent**
**St. Bruno Que. J3V 4Z2 (CA)**

(74) Mandataire: **Martinet & Lapoux**
**62, rue des Mathurins**
**F-75008 Paris (FR)**

(54) **Méthode de traitement des eaux contenant des métaux lourds, tels que chrome.**

(57) L'invention concerne une méthode pour traiter en continu une solution aqueuse contenant certains ions à éliminer.

La solution aqueuse contenant les ions à éliminer est d'abord neutralisée si elle est acide, puis mise en contact avec un sel métallique (1) qui est à la fois très faiblement soluble dans l'eau et a une très forte affinité à réagir avec les ions à éliminer pour former un autre sel insoluble dans l'eau. Ce contact est effectué pendant une période de temps suffisante pour permettre à cet autre sel insoluble de se former. Cette méthode est très efficace et peut être utilisée, par exemple, pour retirer le chrome d'eaux usées, en utilisant du carbonate de barium comme sel très faiblement soluble dans l'eau.

Fig. 1

EP 0 278 830 A1

## Description

### Méthode de traitement des eaux contenant des métaux lourds, tels que chrome

La présente invention concerne une méthode pour traiter en continu des solutions aqueuses telles que des eaux usées industrielles, contenant certains ions à éliminer, notamment des ions des métaux lourds.

De très nombreuses méthodes sont connues et couramment utilisées pour traiter des solutions aqueuses contenant des ions à éliminer, telles que des bains de placage au chrome, des eaux poluées de mercure, des saumures contaminées, etc., de façon à rendre ces solutions aqueuses à nouveau utilisables, buvables, réutilisables ou recyclables après élimination des ions polluants ou dangereux.

Ces méthodes qui sont principalement utilisées dans l'industrie pour éliminer les ions de métaux lourds tels que le mercure, le cadmium, le cuivre, le zinc, le nickel, le cobalt ou le chrome en solution dans des eaux usées, peuvent être habituellement classées comme suit :

1) méthodes dans lesquelles des ions de métaux lourds sont éliminés par échange d'ions ou absorption (voir US-A-3728257 ; US-A-4107481 et US-A-4481087 et également CA-A-1011476 et CA-A-1084181);

2) méthodes dans lesquelles la solution aqueuse est traitée avec un agent de floculation puis sujette à décantation ; et

3) méthodes dans lesquelles des ions de métaux lourds sont éliminés par précipitation directe au moyen d'un sel dissous dans la solution (voir US-A-3493328 ; US-A-3552917 ; US-A-3969246 ; US-A-4054517 ; US-A-4338200 ; US-A-4401573 et US-A-4465598 et aussi CA-A-836623.

La présente invention vise à offrir une méthode pour traiter en continu une solution aqueuse telle que, par exemple, une eau usée industrielle, de façon à en éliminer certains ions, tels que des ions de métaux lourds, selon laquelle les ions à éliminer sont rendus insolubles non pas par précipitation directe avec un sel déjà dissous dans la solution et capable de réagir en solution avec les ions à éliminer pour former un composé insoluble, mais plutôt par réaction directe avec un sel de métal qui n'est que très faiblement soluble dans l'eau et a une très forte affinité à réagir avec les ions à éliminer pour former avec ceux-ci un nouveau sel qui est complètement insoluble dans l'eau.

A cette fin, une méthode pour traiter en continu une solution aqueuse contenant des ions à éliminer de façon à éliminer les ions de façon continue est telle que définie dans la revendication 1.

Par "sel très faiblement soluble", on entend selon l'invention tout sel ayant une très faible solubilité dans l'eau, de préférence comprise entre 1 et 2000 ppm à température ambiante.

Avantageusement, la méthode selon l'invention peut être mise en oeuvre d'une façon très directe sans nécessiter une acidification importante de la solution avant son traitement. En fait, selon l'invention, il est même nécessaire de neutraliser la solution à traiter si celle-ci est acide ou, plus généralement non neutre, avant de la mettre en contact avec le sel très faiblement soluble de façon à éviter une dissolution des sels utilisés et formés au cours de la réaction.

En outre, la méthode selon l'invention est extrêment simple à mettre en oeuvre à bas prix.

La méthode selon l'invention s'applique au traitement de toute solution aqueuse contenant certains ions à éliminer choisis dans le groupe constituée par

- les ions des métaux suivants :

Al, Ag, As, Au, Ba, Be, Bi, Cd, Ce, Co, Cr, Cu, Fe, Hg, Mg, Mn, Mo, Ni, Pb, Pd, Pt, Sb, Se, Sn, Sr, Th, Ti et Zn.

- les anions suivants :

$CN^-$, $CrO_4^{--}$ et $Cr_2O_4^{--}$.

L'invention peut être mise en oeuvre au moyen d'un appareil comprenant :

- une cartouche pourvue d'une entrée et d'une sortie contenant une quantité donnée du sel métallique qui est à la fois très faiblement soluble dans l'eau et a une très forte affinité à réagir avec les ions à éliminer pour former avec ceux-ci un autre sel insoluble dans l'eau ;

- des moyens tels qu'une pompe à débit variable, pour passer la solution aqueuse à traiter dans la cartouche à une vitesse choisie pour permettre aux ions à éliminer de la solution de venir en contact avec le sel très faiblement soluble et réagir avec celui-ci pour former l'autre sel insoluble ;

- des moyens doseurs pour neutraliser la solution à traiter si nécessaire avant que celle-ci entre dans la cartouche ; et

- des moyens tels qu'un grillage ou un filtre à la sortie de la cartouchè, pour empêcher le sel très faiblement soluble et le sel insoluble formé au cours de la réaction dans le récipient de s'échapper de ce dernier lorsque la solution aqueuse passe.

L'invention et ses divers avantages ressortiront mieux à la lecture de la description détaillées et non restrictive qui va suivre, laquelle est donnée en référence aux dessins annexés dans lesquels:

- la fig. 1 est une représentation schématique de l'appareil selon l'invention pour traiter en continu une solution aqueuse contenant certains ions à éliminer; et

- la fig. 2 est une courbe représentant les résultats d'un essai effectué sur une solution aqueuse contenant du chrome, laquelle courbe donne la concentration en ions $Cr^{+6}$ (exprimée en ppm) en fonction du temps (exprimé en jour).

L'invention est basée sur le fait que n'importe quel sel métallique qui est très faiblement soluble dans l'eau et a une très forte affinité à réagir avec certains ions à éliminer pour former avec ceux-ci un autre sel qui est insoluble, va, dès qu'il sera mis en contact avec la solution aqueuse à traiter, se dissoudre très faiblement dans l'eau de cette solution pour y former une solution saturée d'ions qui, à leur tour, vont en permanence réagir avec les ions à éliminer pour former l'autre sel insoluble. La précipitation de ce sel insoluble va, à son tour, perturber l'équilibre existant entre les ions dissous du sel très faiblement soluble et ce sel lui-même, pour ainsi amener d'avantage de sel à se dissoudre et à réagir avec les ions à éliminer.

Selon la théorie bien connue d'ARRHENIUS, n'importe quel sel se comportant comme une électrolyte en solution sous concentration faible, forme dans la solution un système en équilibre contenant, d'un côté, l'électrolyte non dissous en tant que tel et, de l'autre côté, une solution contenant ses ions dissous. Bien entendu, ce système en équilibre suivant la loi d'action de masse selon laquelle n'importe quel électrolyte AB en solution doit subir une ionisation et sera en équilibre dans ladite solution avec ses ions $A^+$ et $B^-$ selon l'équation suivante:

$$AB \rightleftharpoons AB \rightleftharpoons A^+ + B^-$$
$$\text{(solide)} \qquad \text{(en solution saturée)} \qquad \text{(ions en solution)}.$$

Si l'on applique la loi d'action de masse aux ions qui sont ainsi formés, on obtient:

$$\frac{c_{A^+} \cdot c_{B^-}}{c_{AB}} = k$$

dans laquelle k est la constate d'ionisation.

Si, d'une quelconque façon, la concentration de l'un des ions en solution est diminuée, l'équilibre va se trouver perturbé et davantage de sel non dissocié va se dissoudre pour maintenir la concentration ionique.

Selon l'invention, ce phénomène bien connu est utilisé pour éliminer certains ions lourds, dissous dans une solution aqueuse. Dans un but de simplification, on fera ci-après exclusivement référence au chrome $CR^{+6}$ comme ion à éliminer de la solution, et à $BaCO_3$ comme sel très faiblement soluble utilisé pour éliminer le chrome. On comprendra toutefois que l'invention n'est en aucun cas restreinte à ce métal particulier.

Comme on le sait, $BaCO_3$ est pratiquement insoluble dans l'eau (sa solubilité est de 20 ppm à température ambiante). Si une solution de chrome dans l'eau est passée dans un réacteur contenant du carbonate de barium solide, ce dernier va légèrement se dissoudre dans l'eau et l'un de ces ions, à savoir $Ba^{2+}$, va réagir avec le chrome comme suit:

$$H_2CrO_4 + Ba^{++} + CO_3^{--} \rightleftharpoons BaCrO_4 + H_2O + CO_2$$
$$\text{(BaCO}_3 \text{ solide)}$$

Comme cette équation l'indique, le chrome se trouve précipité sous forme de chromate de barium. Comme ce dernier sel est quasiment insoluble (sa solubilité étant de 3 ppm), la concentration en ions barium va se trouver réduite au fur et à mesure que le chromate de barium précipite. Cette réduction va à son tour causer la dissolution de carbonate de barium non dissous pour maintenir l'équilibre de ce sel avec ses ions selon l'équation:

$$BaCO_3 \rightleftharpoons Ba^{2+} + CO_3^{2-}$$
$$\text{(solide)} \qquad \text{(en solution à 20 ppm)}$$

L'équation ci-dessus montre clairement qu'il est possible d'éliminer le chrome en solution aqueuse neutre ou presque neutre, en faisant réagir celui-ci avec du carbonate de barium très faiblement soluble pour former du chromate de barium, puisque, tel que montré ci-dessus, les ions barium vontre être constamment maintenus à une concentration de 20 ppm par application de la loi d'action de masse.

En conséquence, il devient possible d'éliminer le chrome d'une solution aqueuse en faisant simplement réagir celui-ci avec un sel très peu soluble tel que $BaCO_3$, $FeCO_3$ (solubilité 17 ppm) ou $MgCO_3$ (solubilité 100 ppm), ce sel très peu soluble réagissant en effet avec le chrome pour former un sel insoluble, à savoir le chromate de barium.

Cette méthode est particulièrement intéressante dans la mesure où elle peut être utilisée pour purifier des eaux usées industrielles contenant des ions des métaux suivants: Al, Ag, As, Au, Ba, Be, Bi, Cd, Ce, Co, Cr, Cu, Fe, Hg, Mg, Mn, Mo, Ni, Pb, Pd, Pt, Sb, Se, Sn, Sr, Th, Ti, Zn et Zr.

Cette méthode est également intéressante pour purifier des eaux contenant des anions du type suivant: $CrO_4^{--}$, $Cr_2O_4^{--}$ et $CN^-$.

Tel que précédemment indiqué, le choix du sel très faiblement soluble parmi ceux mentionnés dans le préambule de la description doit bien sûr être effectué en fonction de l'affinité respective de ce sel pour les ions à éliminer et sa capacité à former avec les ions à éliminer un autre sel qui est insoluble. Le tableau I ci-dessous donne la liste des sels très faiblement solubles utilisables selon l'invention en fonction des ions à éliminer, ainsi que les autres sels insolubles que l'on peut ainsi obtenir. Ce tableau I fait partie intégrante de la revendication 1.

T A B L E A U   I

| ION À ÉLIMINER | SEL TRES FAIBLEMENT SOLUBLE UTILISÉ POUR L'ÉLIMINATION | SEL INSOLUBLE FORMÉ DURANT LA RÉACTION |
|---|---|---|
| $CN^-$ | $AgCO_3$ | $AgCN$ |
| | $CuCl$ | |
| | $CuC_2O_4 \cdot 1/2H_2O$ | $Cu(CN)_2$ |
| | $NiCO_3$ | $Ni(CN)_2$ |
| | $ZnCO_3$ | $Zn(CN)_2$ |
| $Al^{+++}$ | $Mg(OH)$ (9 ppm), | $Al(OH)_3(i)/$ |
| | $CaO$ (2000 ppm) | $AlO(OH)(i)$ |
| | $Ca_3(PO_4)_2$ (20 ppm) | $Al(PO_4)(i)$ |
| | $Ba\ C_2O_4$ (93 ppm) | $Al_2(C_2O_4)_3 \cdot 4H_2O$ |
| | $CuC_2O_4$ (6.7 ppm) | (i) |
| | $MgC_2O_4 \cdot 2H_2O$ (700 ppm) | |
| $Ag^+$ | $CuCl$ (62 ppm) | $AgCl$ (0.89 ppm) |
| | $CaS$ (210 ppm) | $Ag_2S$ (0.14 ppm) |
| $As$ | $CaS$ (210 ppm) | $As_2S_2(i)$, |
| | | $As_2S_5$ (1.4 ppm) |
| | | $As_2$ (0.5 ppm) |
| $Au^+$ et $AU^{+++}$ | $CaS$ (210 ppm) | $Au_2S(i)$  $Au_2S_3(i)$ |
| $Ba^{++}$ | $Ca_3(PO_4)_2$ (20 ppm) | $Ba_3(PO_4)_2(i)$ |
| | $CaSiO_3$ (95 ppm) | $BaSO_4$ (0.2 ppm) |

| | | |
|---|---|---|
| $Be^{++}$ | $BaCO_3$ (20 ppm), $CaCO_3$ (15ppm) | ($BeCO_3$ + $Be(OH_2)$ (i) |
| | $FeCO_3$ (67ppm) $MgCO_3$ (100 ppm) | |
| | $MnCO_3$ (65 ppm) | |
| | $CaSO_4$ (2000 ppm) | $BeSO_4$ (i) |
| | | |
| $Bi^{++}$ | $BaCO_3$ (20ppm), $CaCO_3$ (15ppm) | $Bi_3O_2CO_3$ (i) |
| | $FeCO_3$ (67ppm), $MgCO_3$ (100ppm) | |
| | $MnCO_3$ (65ppm) | |
| | $Mg(OH)_2$ (9ppm), $CaO$ (2000ppm) | $Bi(OH)_3$ (1.4ppm) |
| | $CaS$ (210ppm) | $Bi_2S_3$ (0.018ppm) |
| | | |
| $Cd^{++}$ | $BaCO_3$ (20ppm), $CaCO_3$ (15ppm) | $CdCO_3$ (i) |
| | $FeCO_3$ (67ppm), $MgCO_3$ (100ppm) | |
| | $MnCO_3$ (65ppm) | |
| | $Ca_3(PO_4)_2$ (20ppm) | $Cd_3(PO_4)_2$ (i) |
| | $CaS$ (210ppm) | $CdS$ (1.3ppm) |
| | | |
| $Ce^{+++}$ | $BaCO_3$ (20ppm), $CaCO_3$ (15ppm) | $Ce_2(CO_3)_3 \cdot 5H_2$ (i) |
| | $FeCO_3$ (67ppm) $MgCO_3$ (100ppm) | |
| | $Mn\ CO_3$ (65ppm) | |
| | $Ca_3(PO_4)_2$ (20ppm) | $CePO_4$ (i) |
| | $CaS$ (210ppm) | $Ce_2S_3$ (i) |
| | | |
| $Co^{++}$ | $BaCO_3$ (20ppm), $CaCO_3$ (15ppm) | $CoCO_3$ (i) |
| | $FeCO_3$ (67ppm), $MgCO_3$ (100ppm) | $2CoCO_3 \cdot Co(OH)_2 \cdot$ $H_2O$ (i) |
| | $MnCO_3$ (65ppm) | |
| | $Mg(OH)_2$ (9ppm) | $Co(OH)_2$ (3.2ppm) |
| | $BaSO_3$ (200ppm), $CaSO_3$ (43ppm) | $CoSO_3 \cdot 5H_2O$ (i) |
| | $CaS$ (210ppm) | $CoS_2$ (i) |
| | | $CoS$ (4ppm) |

$Cr^{+6}$
$(CrO_4^{=})$     $BaCO_3(20ppm)$     $BaCrO_4(3ppm)$

$Cr^{+3}$     $BaCO_3(20ppm).BaC_2O_4(93ppm)$   $BaO.4Cr_2O_4(i)$
$BaSO_3(200ppm)$

$(Cr_2O_4^{=})$     $CaCO_3(20ppm),CaO(2000ppm)$   $CaCr_2O_4(i)$
$Ca_3(PO_4)_2(20ppm)CaCrO_4(6.7ppm)$
$CaSiO_3(95ppm)$   $CaSO_4(2000ppm)$
$CaSO_3(43ppm)CaS(210ppm)$
$FeCO_3(67ppm)Fe_2C_2O_4.2H_2O$     $FeCr_2O_4(i)$
$(220ppm)$
$MgCO_3(100ppm)Mg(OH)(9ppm)$     $MgCr_2O_4(i)$
$Mg(C_2O_4.2H_2O$ $(700ppm)$
$MnCO_3(65ppm)$     $MnCr_2O_4(i)$

$Cr^{+3},Cr^{+2}$     $CaS(210ppm)$     $As(i)$
$A_2S_3(i)$

$Cu^{+},Cu^{++}$     $BaCO_3(20ppm),CaCO_3(15ppm)$   $Cu_2CO_3(i)$
$FeCO_3(67ppm)$
$MgCO_3(100ppm)MnCO_3(65ppm)$   $CuCO_3.Cu(OH)_2(i)$
$Mg(OH)_2(9ppm)$     $Cu(OH)_2(i)$
$CaO(2000ppm)$     $Cu(OH)_2(i)$
$BaSO_3(200ppm)CaSO_3(43ppm)$   $Cu_2SO_3.H_2O(i)$
    $Cu_2SO_3.CuSO_3.H_2O(i)$
$CaS(210ppm)$     $Cu_2S(i)$
    $CuS(0.3ppm)$

$Fe^{++},Fe^{+3}$     $Mg(OH)_2(9ppm)$     $Fe(OH)_2$ $(1,5ppm)$
$CuO(2000ppm)$     $Fe(OH)_2$ $(1,5ppm)$
$Cu_2(PO_4)_2$ $(20ppm)$     $Fe_3(PO_4)_2$ $8H_2O(i)$
$CuS(210ppm)$     $FeS_2(5pppm)$
    $FeS$ $(6ppm)$

$Hg^+, Hg^{++}$ $BaCO_3(20ppm), CaCO_3(15ppm), FeCO_3(67ppm)$ $Hg_2CO_3(0.045ppm)$

$MgCO_3(100ppm), MnCO_3(65ppm)$

$CuCl$ $(62ppm)$ $Hg Cl_2(2ppm)$

$CuS(210ppm)$ $Hg_2S(i)$

$HgS(i)$

$Mg^{++}$ $Cu_3(PO_4)_2(20ppm)$ $Mg_3(PO_4)_2(i)$

$Mn^{++}$ $Cu_3(PO_4)_2(20ppm)$ $Mn_3(PO_4)_2(i)$

$CuS(210ppm)$ $3MnS.H_2O(6ppm)$

$MnS(5ppm)$

$Mo$ $CuS(210ppm)$ $MoS_2(i)$

$Mo_2S_5, 3H_2O(i)$

$Mo_2S_3(i)$

$MoS_4(i)$

$Ni^{++}$ $BaCO_3(20ppm), CaCO_3(15ppm), FeCO_3(67ppm)$ $2NiCO_3.3Ni(OH)_2.4H_2O(i)$

$MgCO_3(100ppm), MnCO_3(65ppm)$

$Ca_3(PO_4)_2(20ppm)$ $Ni_3(PO_4)_2.SH_2O(i)$

$Ba C_2 O_4(93ppm), CuC_2O_4(6.7ppm)$ $Ni C_2O_4.2H_2O(i)$

$BaSO_3(200ppm), CaSO_3(43ppm)$ $NiSO_3.6H_2O(i)$

$Ca S(210ppm)$ $NiS(3.6ppm)$

$Ni_3S_2(i)$

$Ni_3S_4(i)$

$Pb^{++}$ $BaCO_3(20ppm), CaCO_3(15ppm), FeCO_3(67ppm)$ $2PbCO_3éPb(OH)_2(i)$

$Mg CO_3 (100ppm), MnCO_3(65ppm)$

$Cu_3(PO_4)_2(20ppm)$ $Pb_3(PO_4)_2(0.14ppm)$

$BaC_2O_4(93ppm), CaC_2O_4(6.7ppm)$ $PbC_2O_4(1.6ppm)$

$BaSO_3(200ppm), CaSO_3(43ppm)$ $PbSO_3(i)$

| | | |
|---|---|---|
| $Pd^{+n}$<br>$n=+1,+2,+4$ | $CaS(210ppm)$ | $PdS_2(i)$<br>$PdS(i)$<br>$Pd_2S(i)$ |
| $Pt^{+n}$<br>$n=+2,+4,+3$ | $Mg(OH)_2(9ppm)$<br><br>$CuO(2000ppm)$<br><br>$CaS(210ppm)$ | $Pt(OH)_2(i)$<br>$Pt(OH_2.2H_2O(i)$<br>$Pt(OH)_2(i)$<br>$Pt(OH)_2.2H_2O(i)$<br>$PtS_2(i)$<br>$PtS(i)$<br>$Pt_2S_3(i)$ |
| $Sb^{+n}$<br>$n=+3,+5$ | $CaSO_4(2000ppm)$<br>$CaS(210ppm)$ | $Sb_2(SO_4)_3(i)$<br>$Sb_2S_5(i)$<br>$Sb_2S_3(1.8ppm)$ |
| $Se^{++}$ | $CuS(210ppm)$ | $SeS(i)$ |
| $Sn^{+n}$<br>$n=+2,+4$ | $Ca_3(PO_4)_2(20ppm)$<br>$CaS(210ppm)$ | $Sn_3(PO_4)_2(i)$<br>$SnS(i)$<br>$SnS_2(2ppm)$ |
| $Sr^{+2}$ | $Ca_3(PO_4)_2(20ppm)$<br>$CaS(210ppm)$ | $SrHPO_4(i)$<br>$SrS(i')$ |
| $Th^{+4}$ | $BaCO_3(20ppm),CaCO_3(15ppm),FeCO_3(6.7ppm)$<br>$MgCO_3(100ppm),MnCO_3(65ppm)$<br>$Ba\ C_2O_4(93ppm),CuC_2O_4(6.7ppm)$<br>$CaS(210ppm)$ | $Th(CO_3)_2(i)$<br><br>$Th(C_2O_4)_2(i)$<br>$ThS_2(i)$ |
| $Ti^{+n}$<br>$n=+2,+3$ | $CaS(210ppm)$ | $TiS(i)$<br>$Ti_2S_3(i)$ |

$Zn^{+2}$ $\qquad$ $Ca_3(PO_4)_2(20ppm)$ $\qquad$ $Zn_3(PO_4)_2(i)$
$Zn_3(PO_4)_2 \cdot 8thO(i)$
$Zn_3(PO_4)_2 \cdot 4H_2O(i)$
$CaS(210ppm)$ $\qquad$ $ZnS(7ppm)$
$ZnS \cdot H_2O(i)$

$(i) = insoluble$

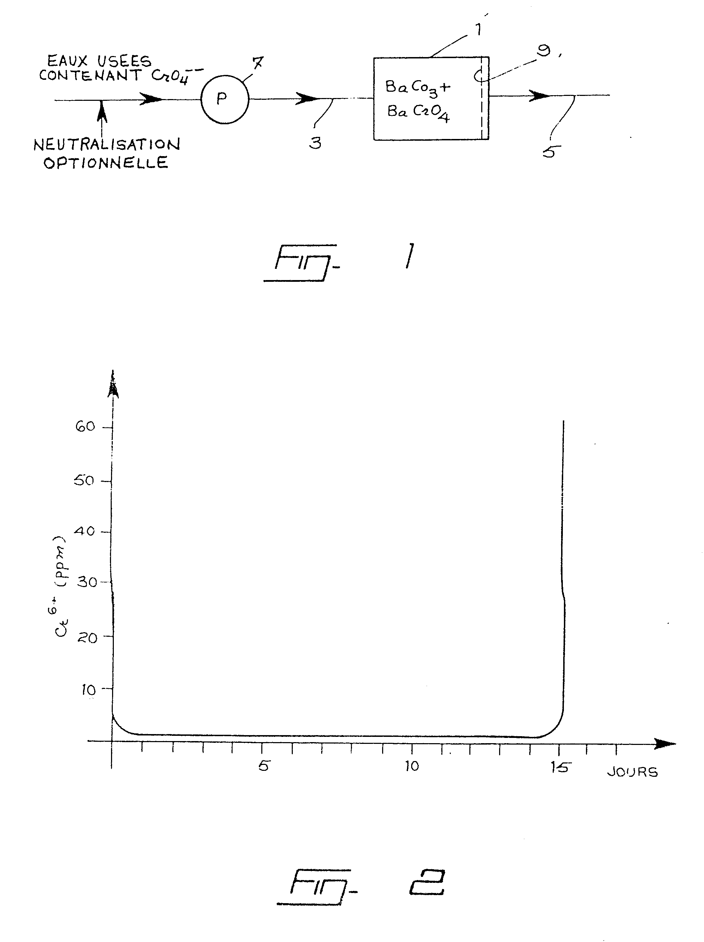

Le procédé selon l'invention peut être mis en oeuvre en continue, en utilisant un appareil tel qu'illustré sur la Figure 1, comprenant une cartouche pourvue d'une entrée 3 et d'une sortie 5. Une pompe à débit variable 7 est disposée en amont de l'entrée 3 du récipient pour pomper la solution aqueuse à traiter et la passer à travers le récipient 1. Sur la Figure 1, cette solution est décrite comme étant une eau usée industrielle contenant des ions chrome. La cartouche 1 est de dimension choisie pour contenir une certaine quantité de sel de métal qui est très faiblement soluble dans l'eau et à une très forte affinité à réagir avec les ions à éliminer pour former avec ceux-ci un autre sel qui est insoluble dans l'eau. Dans le cas particulier des ions chrome, ce sel partiellement soluble peut être BaCO₃. Des moyens 9 qui peuvent être constitués par un grillage, un filtre ou tout autre moyen analogue, sont disposés dans la sortie 5 de la cartouche ou près de celle-ci, de façon à empêcher le carbonate de barium partiellement soluble et le chromate de barium insoluble se formant à l'intérieur du récipient de sortir de cette cartouche lorsque la solution aqueuse est passée au sein de celle-ci par la pompe 7.

Le sel très faiblement soluble BaCO₃ peut être sous forme de poudre. Il peut également être supporté ou "travaillé" pour former un lit filtrant, un lit fluidisé, une pâte ou un lit mouvant. Le débit de la pompe 7 doit être ajusté en fonction de la quantité de BaCO₃ ou de sa forme à l'intérieur du récipient de façon à ce que les ions chrome en solution dans l'eau usée industrielle à traiter aient suffisamment de temps pour réagir avec BaCO₃ pour former BaCrO₄. En d'autres mots, ce débit doit être ajusté pour être suffisamment lent pour permettre une réaction complète des ions avec la solution de barium, au fur et à mesure que les ions barium sont éliminés par réaction avec le chrome pour former le chromate de barium, plus de carbonate de barium va se dissoudre pour maintenir l'équilibre. Au cours de ce procédé, il n'y a jamais aucun excès de barium dans la solution car la solubilité du carbonate de barium n'est seulement que de 20 ppm et car d'autres ions barium ne se formeront et ne seront ajoutés à la solution passant dans le récipient que lorsque les ions barium déjà formés et dissous dans la solution auront été éliminés par précipitation sous forme de chromate de barium.

Le fait qu'il ne soit pas nécessaire que le carbonate de barium soit tout d'abord dissout par addition d'acide, ou soit ajouté en excés important sous forme de nitrate, de chlorure ou d'acétate de barium tel que défini dans l'art antérieur, est un point essentiel de l'invention. En effet, comme il n'y a pas d'excès d'ions barium dans la solution traitée selon l'invention, il n'y a pas non plus de précipitation de barium en aval de la zone de réaction et, par conséquent, aucun des problèmes d'élimination habituellement liés à ce type de précipitation en aval.

En pratique, si la concentration d'ions chrome dans la solution est très supérieure à celle en ions barium saturés en solution (20 ppm), il est nécessaire d'utiliser un temps de réaction plus long pour que suffisamment d'ions barium soient en solution. Ceci peut être obtenu en utilisant un récipient ayant un volume de réaction plus grand et que ainsi contiendra plus d'ions barium au total, même si la solubilité du carbonate de barium est très faible.

Le précipité qui se forme au cours de la réaction ce qui contient principalement le sel insoluble formé durant la réaction, lequel contient les ions métalliques que l'on cherche à éliminer, peut être récupéré et, si désiré, traité pour récupérer les ions sous forme de métal ou de sels métalliques. Bien entendu, les eaux usées industrielles qui ont été ainsi traitées peuvent être recyclées si désiré.

Il est intéressant de mentionner que la méthode selon l'invention peut être utilisée pour le traitement d'eaux usées industrielles dans lequel les ions métal à ions métalliques peuvent être extraits en utilisant la méthode selon l'invention, après les avoir précédemment extraits de la solution organique au moyen d'eau ou d'un autre agent extractant.

Il est également intéressant de mentionner que la méthode selon l'invention peut être utilisée pour éliminer différents types d'ions d'une même solution, tout simplement en disposant une pluralité de cartouches telles qu'illustrées sur la Figure 1 en aval de la pompe, chaque cartouche contenant un sel de métal très faiblement soluble adéquatement choisi pour éliminer un type d'ion donné. Ainsi, il devient possible d'éliminer plusieurs ions en série, en utilisant une pluralité de cartouches disposées dans différents récipients montés en série à la sortie de la pompe.

Alternativement, on peut disposer un mélange de plusieurs sels très faiblement solubles dans une même cartouche pour éliminer plusieurs types d'ions simultanément dans cette cartouche.

Il est enfin intéressant de mentionner que la méthode selon l'invention va à l'encontre de ce que l'on décrit dans l'art antérieur tel que, par exemple, le brevet CA-A-836.623. Dans ce brevet, il est décrit et revendiqué que l'addition d'un excès de carbonate de barium sous forme soluble dans une solution contenant des ions chrome est inopérante pour précipiter tous les ions chrome contenant cette solution sous forme de chromate de barium (voir page 3, lignes 2 à 5). Ceci va totalement à l'encontre de la présente invention où l'on utilise le carbonate de barium sous forme solide pour réduire la concentration de chrome dans une solution neutre contenant des ions chrome à un niveau inférieur à 0,7 ppm.

Pour résoudre le soi-disant problème présenté dans le préambule de ce brevet canadien, de l'acide est ajouté pour transformer le carbonate de barium solide présent dans la solution en hydrochlorure ou nitrate de barium très solubles qui passent alors dans la solution. A l'opposé, il est essentiel selon l'invention de ne pas acidifier la solution ni de procéder à une précipitation directe par addition d'un excès de carbonate de barium qui se trouve alors dissous par un acide de (HCl, $HNO_3$, acide acétique, etc...). En d'autres mots, le procédé décrit dans ce brevet CA-A- no 836.623 exige que $BaCO_3$ soit dissout par addition d'un acide de façon à obtenir une très forte concentration de barium dans la solution sous forme de chlorure de barium ou de nitrate de barium. Alors, la solution de sel de barium qui est ainsi formé, va réagir avec les ions chrome pour donner du chromate de barium à condition toute fois que la solution soit alors neutralisée. Ce procédé est complètement différent du procédé selon l'invention à la fois dans son "approche" et dans la façon dont il est mis en oeuvre.

De façon similaire, le brevet US-A-3.969.246 qui est tout à fait illustratif de l'art antérieur dans ce domaine, décrit une méthode dans laquelle le chrome est éliminé d'une solution par précipitation directe avec du carbonate de barium. Là encore, le carbonate de barium est mélangé et dissout avec de l'acide acétique dans un milieu aqueux avant d'ajouter ce mélange à la solution de chrome. Le pH du mélange est compris entre 4,5 et 4,7, c'est-à-dire très acide. Il est donc parfaitement clair que le carbonate de barium est tout d'abord converti en acétate de barium avant d'être utilisé tel quel pour précipiter les ions chrome.

A l'opposé, la méthode selon l'invention consiste à mettre la solution contenant les ions chrome en contact avec le carbonate de barium à un pH d'environ 7. Le carbonate de barium est utilisé tel quel sous forme d'ions solubles et aucun excès d'ions barium n'est présent ou n'est nécessaire dans la solution contenant les ions chrome.

EXEMPLE:

Dans un appareil tel qu'illustré sur la Figure 1 des dessins, 800 litres d'une solution aqueuse contenant environ 30 g de $CrO_3$ ont été passés à un débit de 5 litres à l'heure. Le récipient de l'appareil contenait 100 g de carbonate de barium. Le temps de résidence de la solution dans le récipient était d'environ 25 minutes.

La concentration d'ions chrome originalement de 50 ppm dans la solution aqueuse a été mesurée à la sortie du récipient à intervalles de temps donnés et les résultats de cette mesure sont reportés sur la Figure 2.

Comme on peut constater, après une période de stabilisation d'environ une journée, la concentration d'ions chrome dans la solution aqueuse à la sortie du récipient est tombée à un très faible niveau de l'ordre de 0,25 pm. Cette faible teneur en chrome a été maintenue pendant plus de 15 jours, après quoi, lorsque le lit filtrant de $BaCO_3$ a été saturé de $BaCrO_4$, la quantité d'ions chrome en solution à la sortie du récipient a commencé à augmenter rapidement pour rejoindre la valeur de la concentration originale en chrome dans la solution à traiter.

Cet essai montre clairement que la méthode selon l'invention est très efficace et peut être utilisée du point de vue industriel.

**Revendications**

1. Méthode pour traiter en continue une solution aqueuse contenant des ions à éliminer de façon à éliminer lesdits ions de façon continue, caractérisée en ce que :
(a) on neutralise la solution aqueuse contenant les ions à éliminer si cette solution est acide ; et
(b) on passe ladite solution aqueuse le cas échéant neutralisée à travers une cartouche (1) contenant un sel métallique qui est à la fois très faiblement soluble dans l'eau et a une très forte affinité à réagir avec les ions à éliminer pour former un autre sel insoluble dans l'eau, ledit passage s'effectuant à une vitesse choisie de façon à ce que le temps de contact de ladite solution avec ledit sel très faiblement soluble soit suffisant pour permettre à cet autre sel insoluble de se former,
et en ce que les ions à éliminer, le sel métallique très faiblement soluble dans l'eau utilisée pour l'élimination et l'autre sel métallique insoluble dans l'eau formé au cours de la réaction sont choisis parmi ceux listés dans le tableau I donné dans la description.

2. Méthode conforme à la revendication 1, caractérisée en ce qu'elle comprend l'étape supplémentaire consistant à changer la cartouche (1) à travers laquelle la solution aqueuse passe dès que tout le sel très légèrement soluble dans celle-ci a réagi avec les ions à éliminer.

3. Méthode conforme à la revendication 2, caractérisé en ce que l'on utilise dans la cartouche (1) à l'étape (b) un un mélange d'au moins deux sels très faiblement solubles dans l'eau et ayant chacun une affinité particulière à réagir avec un type d'ions de façon à éliminer simultanément de la solution au moins deux types d'ions différents.

4. Méthode conforme à la revendication 2, caractérisée en ce qu'elle comprend l'étape supplémentaire consistant à répéter l'étape (b) au moins une fois avec une autre cartouche contenant un autre sel très faiblement soluble dans l'eau et ayant une forte affinité à réagir avec d'autres ions en solution pour éliminer ces autres ions.

0278830

EAUX USEES
CONTENANT $Cr_2O_4^{--}$

NEUTRALISATION
OPTIONNELLE

$BaCo_3 + BaCr_2O_4$

Fig. 1

Fig. 2

**Office européen des brevets**

# RAPPORT DE RECHERCHE EUROPEENNE

Numero de la demande

EP 88 40 0157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A- 980 709 (M. SCHMITT) <br> * Page 2, résumé, point 1; page 1, exemple * <br> --- | 1 | C 02 F 1/62 |
| X | GB-A-1 387 552 (YOSHIAKI KAJIYAMA) <br> * Page 1, lignes 66-77; page 5, revendications 1-4 * <br> --- | 1 | |
| X | FR-A-2 253 714 (G.J. NIEUWENHUIS) <br> * Page 1, lignes 1-3; page 1, ligne 27 - page 2, ligne 10; page 2, ligne 23 - page 3, ligne 31; page 6, revendications 1,2,5 * <br> --- | 1,2 | |
| X | FR-A-2 253 715 (AGENCE NATIONALE DE VALORISATION DE LA RECHERCHE) <br> * Page 1, ligne 18 - page 2, ligne 11; page 2, lignes 31-36 * <br> --- | 1 | |
| X | CA-A-1 067 627 (G.D. LUTWICK) <br> * Page 1, ligne 29 - page 4, ligne 5 * <br> ----- | 1 | DOMAINES TECHNIQUES RECHERCHES (Int. Cl.4) <br><br> C 02 F |

Le présent rapport a été établi pour toutes les revendications

| Lieu de la recherche | Date d'achèvement de la recherche | Examinateur |
|---|---|---|
| LA HAYE | 02-05-1988 | TEPLY J. |